# EUROPÄISCHE PATENTSCHRIFT

(11) **EP 0 899 076 B1**
(45) Veröffentlichungstag und Bekanntmachung des Hinweises auf die Patenterteilung: **26.02.2003**
(21) Anmeldenummer: 98115586.4
(22) Anmeldetag: 19.08.1998
(51) Int. Cl.: B29C 47/00, A22C 13/00

(54) **Verfahren und Vorrichtung zur Herstellung eines nahtlosen Folienschlauches auf Cellulosebasis durch Extrudieren**
Process and apparatus for producing a seamless cellulose-based tubular film by extrusion
Procédé et dispositif pour la fabrication d'un produit tubulaire par extrusion à base de cellulose et sans soudure

(30) Priorität: 27.08.1997 DE 19737113
(43) Veröffentlichungstag der Anmeldung: 03.03.1999
(73) Patentinhaber: Kalle Nalo GmbH & Co. KG, 65203 Wiesbaden (DE)
(72) Erfinder: Gord, Herbert, Dipl.-Ing., 55218 Ingelheim (DE); Hammer, Klaus-Dieter, Dr. Dipl.-Chem., 55120 Mainz (DE); Sattler, Helmut, 65201 Wiesbaden (DE)
(74) Vertreter: Zounek, Nikolai, Dipl.-Ing.

(56) Entgegenhaltungen:
- EP-A- 0 662 283
- EP-A- 0 692 194
- WO-A-95/07811
- GB-A- 304 754
- US-A- 3 121 762

## Beschreibung

Die Erfindung betrifft ein Verfahren und eine Vorrichtung zur Herstellung eines nahtlosen Folienschlauches auf Cellulosebasis durch Extrudieren einer wäßrigen Cellulose-N-methyl-morpholin-N-oxid (NMMO)-Lösung durch eine Ringdüse in ein Spinnbad.

Cellulose ist in den üblichen Lösemitteln nicht löslich und hat weder einen Schmelzpunkt oder einen Schmelzbereich und kann daher auch nicht thermoplastisch verarbeitet werden. Aus diesem Grund wird Cellulose normalerweise zur Herstellung von Schlauchhüllen für Nahrungsmittel, wie beispielsweise Wursthüllen, chemisch umgewandelt, wobei diese Verfahren mit einem Abbau der Cellulose verbunden sind, d.h. der durchschnittliche Polymerisationsgrad der Cellulose wird geringer. Derartige Verfahren sind technisch sehr aufwendig und entsprechend teuer im Betrieb.

Zur Zeit wird das Viskose-Verfahren beim Extrudieren von Folienschläuchen auf Cellulosebasis bevorzugt. Dabei wird die Cellulose mit Natronlauge und anschließend mit Schwefelkohlenstoff umgesetzt. Auf diese Weise wird eine Cellulosexanthogenat-Lösung erhalten, die durch eine Spinn- oder Ringdüse in ein sogenanntes Spinn- oder Fällbad extrudiert wird. Mit Hilfe von weiteren Fällund Waschbädern wird die Cellulose regeneriert.

Es ist seit langem bekannt, daß Cellulose in Oxiden tertiärer Amine löslich ist, Das zur Zeit am besten geeignete Lösemittel für Cellulose ist N-methyl-morpholin-N-oxid (NMMO). Die Cellulose löst sich darin, ohne sich dabei chemisch zu verändern. Es findet kein Abbau von Celluloseketten statt. Die Herstellung geeigneter Spinnlösungen ist bekannt (DD 218 1004; DD 298 789; US-A 4 145 532; US-A 4 196 282; US-A 4 255 300).

Die Erfindung geht von einem Stand der Technik aus, wie er in der EP-A 0 662 283 offenbart ist, die ein Verfahren betrifft, bei dem ein nahtloser Folienschlauch auf Cellulosebasis durch Extrudieren über eine Ringdüse nicht derivatisierter Cellulose, tertiärem Amin N-oxid, wie z. B. NMMO und Wasser hergestellt wird. Der Folienschlauch wird durch ein Wasserbad hindurchgeführt, während er im Inneren durch ein Kühlmittel, beispielsweise Wasser und NMMO gekühlt wird. Es findet weder eine Querverstreckung des Folienschlauches in der Luftstrecke zwischen Ringdüse und Oberfläche des Spinnbades statt noch liegen die Pegel der Innenbadlösung im eintauchenden und aufsteigenden Teil des Folienschlauches tiefer als die Oberfläche des Spinnbades. Die bei dem bekannten Verfahren verwendete Vorrichtung enthält keine Einrichtung, durch welche Luft mit Überdruck in den Folienschlauch einströmen kann und diesen innerhalb der Luftstrecke zwischen Ringdüse und Oberfläche des Spinnbades autweiten und querverstrecken könnte.

Aus den Spinnlösungen lassen sich durch Extrudieren in ein Spinnbad Fäden herstellen (DE-A 44 09 609; US-A 5 417 909). In der WO 95/07811 (= CA 2 149 218) ist auch ein Verfahren zur Herstellung von Cellulose-Schlauchfolien nach dem Aminoxidverfahren offenbart. Kennzeichnend an diesem Verfahren ist die Kühlung der extrudierten Folie mit Kühlgas unmittelbar unterhalb des Ringspalts der Extrusionsdüse. Gemäß der EP-A 662 283 wird die extrudierte Schlauchfolie von innen mit Hilfe von Flüssigkeit gekühlt.

Rückgewinnung und Reinigung des NMMO's sind in der DD 274 435 beschrieben. Da die Cellulose in dem Verfahren chemisch nicht umgewandelt wird, ist der apparative Aufwand geringer. Bei dem Aminoxidverfahren fallen keine gasförmigen oder wäßrigen Abfallprodukte an, so daß es keine Probleme bei der Abluft oder dem Abwasser gibt. Es erlangt daher eine zunehmende Bedeutung.

In der EP-A 0 686 712 wird die Herstellung von flexiblen Cellulosefasern nach dem N-Methylmorpholin-N-Oxid(NMMO)-Spinnverfahren beschrieben. Darin wird eine Celluloselösung in wasserhaltigem NMMO durch eine Spinndüse ausgepreßt, über eine Luftstrecke in ein NMMO-haltiges, wäßriges Fällbad geführt und anschließend gewaschen, nachbehandelt und getrocknet.

Gemäß der WO 93/13670 wird eine nahtlose, schlauchförmige Nahrungsmittelhülle durch Extrudieren einer Lösung von Cellulose in NMMO/Wasser mit Hilfe einer speziellen Extrusionsdüse hergestellt. Zwischen Extrusionsdüse und Fällbad befindet sich eine Luftstrecke. Kennzeichnend für dieses Verfahren ist ein speziell geformter Hohldom, durch den hindurch die Fällflüssigkeit auch im Inneren des Schlauches zirkulieren kann. In der Luftstrecke wird das Innere des extrudierten Schlauches praktisch vollständig von Hohldorn und Fällflüssigkeit ausgefüllt. Der Schlauch wird dabei nicht querverstreckt.

In der WO 95/35340 wird ein Verfahren zur Herstellung von Celluloseblasfolien beschrieben, in dem eine in NMMO gelöste, nicht derivatisierte Cellulose verwendet wird.

Beim Extrudieren eines Folienschlauchs aus einer Ringdüse in ein Spinnbad, wobei innerhalb dieses Spinnbads keine mechanische Abstützung des Folienschlauchs vorgenommen wird, zeigt sich als nachteilig, daß die Kalibergenauigkeit des mit einer Innenbadlösung gefüllten Folienschlauchs nicht eingehalten werden kann und es zu unregelmäßigen Schwankungen im Kaliberdurchmesser des Folienschlauchs während des kontiuierlichen Extrusionsvorgangs kommt.

Aufgabe der Erfindung ist es, ein Verfahren der eingangs beschriebenen Art so zu verbessern, daß ein Folienschlauch mit gleichbleibendem Kaliber, d.h. frei von Schwankungen des Schlauchdurchmessers und ohne Einsatz mechanischer Stütz- und Führungsmittler für den Folienschlauch innerhalb des Spinnbades hergestellt werden kann.

Diese Aufgabe wird verfahrensgemäß in der Weise gelöst, daß der Folienschlauch in einer Luftstrecke zwischen der Ringdüse und der Oberfläche des Spinnbades durch Überdruck querverstreckt wird, daß der Folienschlauch mit einer Innenbadlösung gefüllt und im Spinnbad umgelenkt wird und daß der Pegel der Innenbadlösung im eintauchenden und aufsteigenden Teil des Folienschlauchs tiefer als die Oberfläche des Spinnbades eingestellt wird.

In Ausgestaltung des Verfahren wird die Innenbadlösung durch die Ringdüse hindurch in den Folienschlauch sowohl eingefüllt als auch abgesaugt, wobei das Einfüllen und das Absaugen voneinander räumlich getrennt vorgenommen werden. Die Führung des Folienschlauchs erfolgt derart, daß der Folienschlauch senkrecht zu der Oberfläche des Spinnbades eintaucht und nach dem Umlenken innerhalb des Spinnbades unter einem Winkel von 10 bis 90° zur Horizontalen nach oben aus dem Spinnbad herausgeführt wird. Dabei wird verfahrensgemäß die Dichte der Innenbadlösung im Bereich der Umlenkung des Folienschlauchs kleiner als im senkrecht eintauchenden Teil und im unter einem Winkel von 10 bis 90° zur Horizontalen herausgeführten Teil des Folienschlauchs eingestellt.

In Ausgestaltung des Verfahrens enthalten das Spinnbad und die Innenbadlösung N-methyl-morpholin-N-oxid (NMMO) in wäßriger Lösung und werden die NMMO-Konzentrationen des Spinnbades und der Innenbadlösung zu Beginn der Extrusion des Folienschlauchs etwa gleich groß gewählt. Die NMMO-Konzentration der Innenbadlösung nimmt während des Extrusionsvorgangs in Richtung des Um lenkbereichs des Folienschlauchs zu und steigt zunächst auch gegenüber der NMMO-Konzentration des Spinnbades an und wird durch stetige Erneuerung der Innenbadlösung auf einen Wert kleiner/gleich der Anfangskonzentration abgesenkt.

Die weitere Ausgestaltung des Verfahrens ergibt sich aus den Merkmalen der Patentansprüche 7 bis 11.

Die Vorrichtung zur Herstellung eines nahtlosen Folienschlauchs auf Cellulosebasis durch Extrudieren einer wäßrigen Cellulose-N-methyl-morpholin-N-oxid (NMMO)-Lösung, die eine Ringdüse und ein Spinnbad umfaßt, zeichnet sich dadurch aus, daß zwischen der Ringdüse und der Oberfläche des Spinnbades in einer Spinnkufe eine Luftstrecke vorhanden ist, daß ein Extrusionsdüsenspalt der Ringdüse einen Durchmesser größer als der Außendurchmesser des Rohres aufweist, daß durch den Spalt Luft mit Überdruck in den Folienschlauch einströmt und den Folienschlauch innerhalb der Luftstrecke aufweitet und querverstreckt, daß nahe dem Boden der Spinnkufe eine Umlenkung für den senkrecht in das Spinnbad eintauchenden Folienschlauch angeordnet ist, und daß ein Zulauf- und ein Absaugrohr für eine Innenbadlösung des Folienschlauchs durch die Ringdüse hindurchgeführt sind und in den Folienschlauch hineinragen.

In Weiterbildung der Vorrichtung umschließtein Rohr das Zulauf-und Absaugrohr, durchsetzt zentral eine Pinole der Ringdüse und bildet einen Spalt mit einem zentralen Durchgang der Pinole, wobei das Rohr in die Innenbadlösung des Folienschlauchs eintaucht und einen kleineren Durchmesser als der Folienschlauch aufweist.

In Ausgestaltung der Vorrichtung ist das Absaugrohr innerhalb des senkrecht eintauchenden Folienschlauches höhenverstellbar. Zweckmäßigerweise ist das Zulaufrohr innerhalb des senkrecht eintauchenden Folienschlauches höhenverstellbar, wobei es zu Beginn des Einfüllens der Innenbadlösung in den Folienschlauch eine Position knapp unterhalb der Spinnbadoberfläche und nach erfolgtem Einfüllen der Innenbadlösung eine Position knapp oberhalb der Umlenkung für den Folienschlauch einnimmt.

In Ausgestaltung der Vorrichtung ist das Zulaufrohr innerhalb des senkrecht einlaufenden Folienschlauchs höhenverstellbar. Zweckmäßigerweise nimmt das Zulaufrohr zu Beginn des Einfüllens der Innenbadlösung in den Folienschlauch eine obere Position ein und ist nach erfolgtem Einfüllen der Innenbadlösung in eine Position knapp oberhalb der Umlenkung in den Folienschlauch eingeschoben.

In Weiterbildung der Erfindung tauchen das Rohr 5 bis 50 mm und das Absaugrohr 3 bis 45 mm in die Innenbadlösung ein. Geeigneterweise ist die Umlenkung ein Porzellan- oder Glasstab, dessen Durchmesser größer als das Kaliber des Folienschlauchs ist.

Die weitere Ausgestaltung der Erfindung ergibt sich aus den Merkmalen der Patentansprüche 18 bis 22

Die Erfindung wird im folgenden anhand eines zeichnerisch dargestellten Ausführungsbeispiels näher erläutert.

Es zeigen:
- Fig. 1: eine schematische Schnittansicht der Vorrichtung nach der Erfindung mit hochgestelltem Zulaufrohr im Folienschlauch;
- Fig. 2: eine schematische Schnittansicht der Vorrichtung ähnlich derjeni - gen nach Fig. 1, mit in den Folienschlauch eingeschobenem Zulaufrohr;
- Fig. 3: eine vergrößerte Schnittansicht gemäß der Stelle A in Fig. 1; und
- Fig. 4: schematisch im Schnitt einen Folienschlauch mit Kaliberschwankungen.

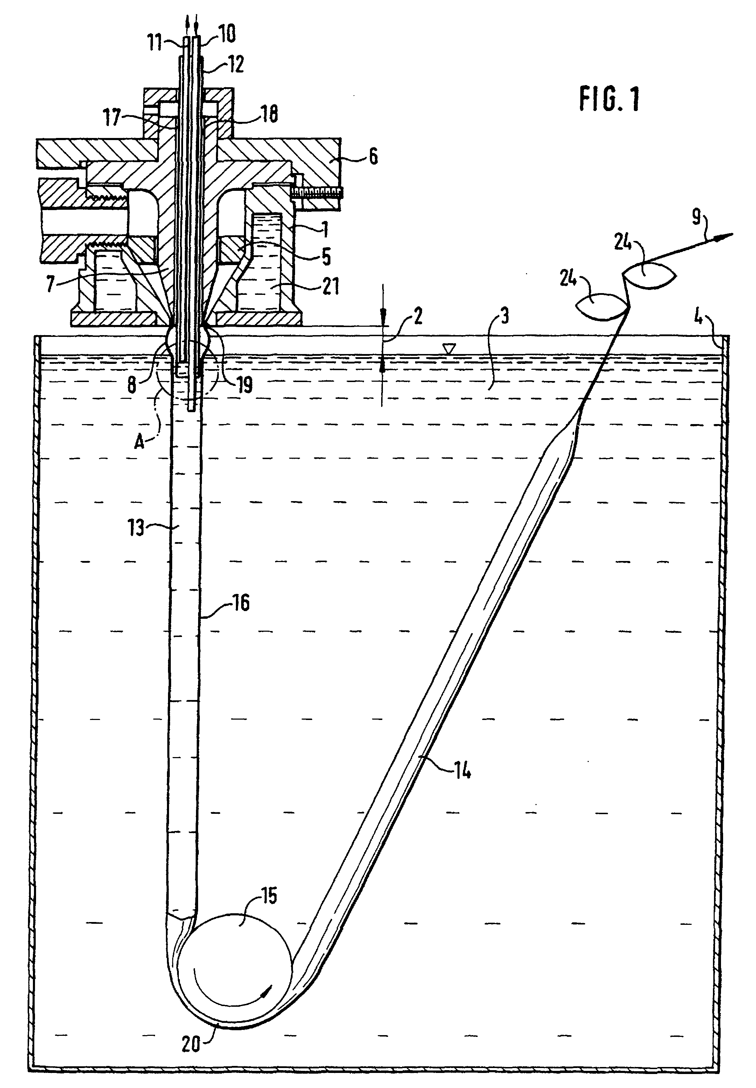

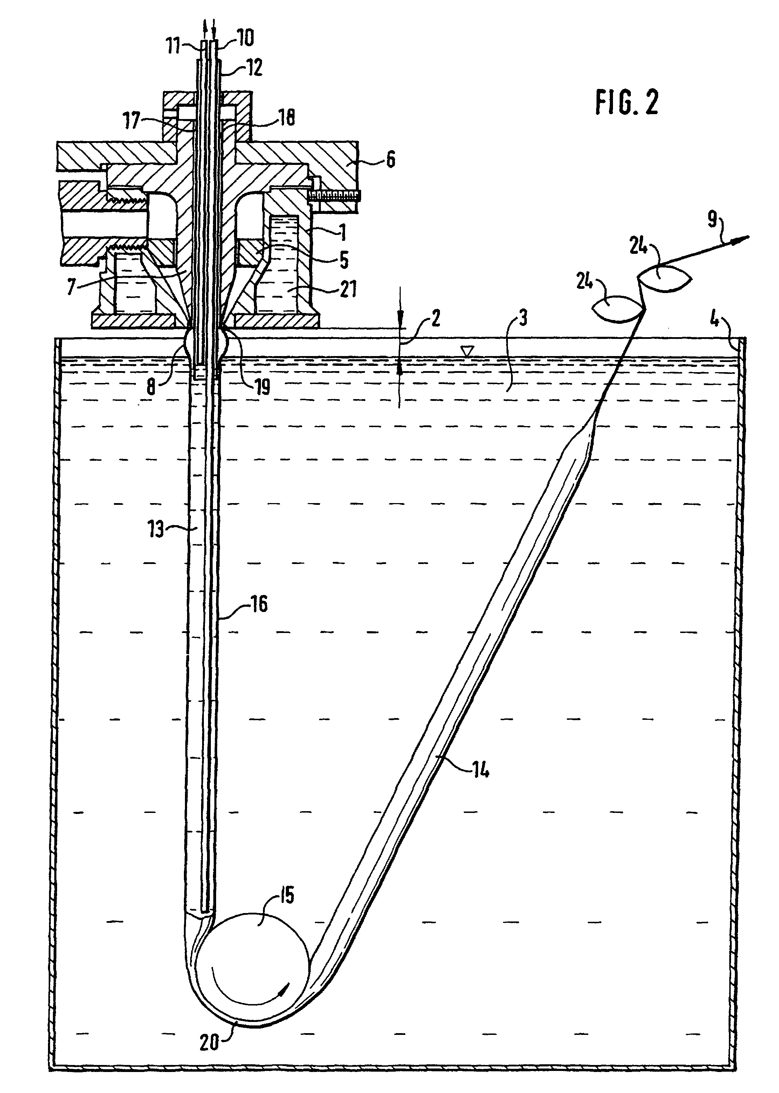

Eine in Fig. 1 gezeigte Vorrichtung zum Extrudieren einer wäßrigen Cellulose-N-methyl-morpholin-N-oxid (NMMO)-Lösung zu einem Folienschlauch umfaßt eine Ringdüse 1 und eine Spinnkufe 4, die mit einem Spinn- oder Fällbad 3 gefüllt ist. Das Spinnbad 3 besteht aus einer wäßrigen NMMO-Lösung mit 12 bis 20 Gew.-%igen, insbesondere 15 Gew.-%igen NMMO-Anteil. Die an sich bekannte Ringdüse 1 umfaßt als wesentliche Bestandteile eine Vorverteilerscheibe 5, eine Verstelleinrichtung 6, eine Pinole 7 mit einem zentralen Durchgang 18 und einen Extrusionsdüsenspalt 19. Die zu einem Folienschlauch zu extrudierende wäßrige Spinnlösung ist eine NMMO-Lösung mit 75 bis 90 Gew.-%, insbesondere 87,7 Gew.-% Morpholinanteil. Die Spinnlösung wird mittels einer nicht gezeigten Spinnpumpe einseitig in die Ringdüse 1 eingebracht. Die Vorverteilerscheibe in der Ringdüse 1 sorgt für eine über dem Umfang weitgehend gleichmäßige Zuführung der Morpholinlösung in den Extrusionsdüsenspalt 19. Die Feineinstellung der Folienschlauchdicke erfolgt über die Verstelleinrichtung 6 der Pinole 7. Die Ringdüse 1 besitzt einen Doppelmantel zur Erwärmung der Ringdüse 1 auf die Temperatur der Morpholinlösung, wobei für die Erwärmung ein Heizmedium 21 vorgesehen ist, das den Doppelmantel durchströmt. Der aus dem Düsenspalt 19 extrudierte Folienschlauch durchläuft eine Luftstrecke 2, in der er mittels Druckluft aufgeweitet und querverstreckt wird. Der aufgeweitete Folienschlauch 8 hat keinen Kontakt mit der Außenseite eines Rohrs 12, das durch den Durchgang 18 der Pinole 7 hindurchgeführt ist und sich über die Unterseite der Ringdüse 1 hinaus nach unten erstreckt. Die Luftstrecke beträgt 10 bis 100 mm. Das Rohr 12 umschließt ein Zulauf- und ein Ablaufrohr 10 bzw. 11 für eine Innenbadlösung 13, die in den Folienschlauch eingefüllt wird. Diese Innenbadlösung 13 ist gleichfalls eine wäßrige NMMO-Lösung mit 12 bis 20 Gew.-%, insbesondere 15 Gew.-% NMMO-Anteil. Das Zulauf- und das Absaugrohr 10 bzw. 11 ragen in den senkrecht nach unten in das Spinnbad 3 eintauchenden Folienschlauch 16 hinein. Zu Beginn des Einfüllens der Innenbadlösung 13 in den Folienschlauch 16 nimmt das Zulaufrohr 10 eine obere Position ein, wie dies in Fig. 1 gezeigt ist. Sobald der Folienschlauch mit der Innenbad lösung gefüllt ist, wird das Zulaufrohr 10 in eine Position in den Folienschlauch 16 eingeschoben, die sich knapp oberhalb einer Umlenkung 15 für den Folienschlauch 16 befindet, wie dies aus Fig. 2 zu entnehmen ist. Das Zulaufrohr 10 ist innerhalb des senkrecht eintauchenden Folienschlauchs 16 höhenverstellbar, ebenso das Absaugrohr 11.

Das Rohr 12 bildet einen Spalt 17 mit der Wand des Durchgangs 18 und durch diesen Spalt 17 wird Luft mit einem Überdruck von 0,5 bis 2,0 mbar in das Schlauchinnere geleitet. Dieser Überdruck bewirkt die Aufweitung des Folienschlauchs in der Luftstrecke 2 unmittelbar nach seinem Austritt aus dem Extrusionsdüsenspalt 19. Der Durchmesser des Extrusionsdüsenspalts 19, bei dem es sich um einen Ringspalt handelt, ist größer als der Außendurchmesser des Rohres 12. Der in das Spinnbad 3 eintauchende Folienschlauch 16 wird nahe dem Boden der Spinnkufe 4 umgelenkt. Hierzu ist eine Umlenkung 15, bei der es sich um einen Porzellan- oder Glasstab handelt, angeordnet, um die der Folienschlauch 16 herumgeführt wird. Nach der Umlenkung wird der Folienschlauch innerhalb des Spinnbades 3 unter einem Winkel von 10 bis 90° zur Horizontalen nach oben aus dem Spinnbad herausgeführt. Der nach oben verlaufende Folienschlauch 14 wird knapp unterhalb der Oberfläche des Spinnbades durch den Innendruck des Spinnbades zusammengequetscht und im zusammengefalteten Zustand aus dem Spinnbad 3 hinausgeführt. Abstreifer 24 zu beiden Seiten des zusammengefalteten Folienschlauchs 14 streifen die überschüssige Spinnbadlösung beidseitig ab und die Breite des flachgelegten Folienschlauchs 9 nach den Abstreifem nahe dem Ausgang aus der Spinnkufe 4 wird als Regelgröße für den Überdruck der Luft im Spalt 17 eingesetzt. Jede Abweichung der Breite des flachgelegten Folienschlauchs 9 von einem vorgegebenen Wert bewirkt eine Nachregelung des Überdrucks in der Weise, daß bei einer Abweichung nach unten der Luftdruck im Spalt 17 erhöht und bei einer Abweichung nach oben der Luftdruck im Spalt 17 erniedrigt wird.

Fig. 2 unterscheidet sich von Fig. 1 nur darin, daß das Zulaufrohr 10 in Fig. 2 im Vergleich zu Fig. 1 soweit in den senkrecht eintauchenden Folienschlauch 16 eingeschoben ist, daß sich die Mündung des Zulaufrohrs knapp oberhalb der Umlenkung 15 befindet. Das Spinnbad 3 und die Innenbadlösung 13 sind, wie schon zuvor erwähnt wurde, wäßrige NMMO-Lösungen, die zu Beginn der Extrusion des Folienschlauchs 16 gleich große NMMO-Konzentrationen aufweisen. Mit fortschreitender Extrusion wird zunächst die NMMO-Konzentration der Innenbadlösung 13 ansteigen, da Morpholin während der Celluloseregenerierung aus dem Foilenschlauch in die Innenbadlösung 13 eintritt und sich dort anreichert. Da Morpholin eine höhere Dichte als Wasser besitzt, steigt die Konzentration bzw. Dichte der NMMO-Lösung in Richtung der Umlenkung 15 innerhalb des Folienschlauchs 16 an. Da sich andererseits die Konzentration der NMMO-Lösung des Spinnbades 3 praktisch nicht ändert, weil das von dem Folienschlauch an das Spinnbad 3 abgegebene Morpholin wegen des großen Volumenunterschieds zwischen Folienschlauch und Spinnbad nur vernachlässigbar geringfügig die NMMO-Konzentration des Spinnbades 3 anheben kann, anders als bei der Innenbadlösung 13 im Folienschlauch 16, käme es ohne Regelung der NMMO-Konzentration der Innenbadlösung 13 zu einer Ausdehnung des Folienschlauchs 16. Durch die ständige Zufuhr und das Absaugen der Innenbadlösung 13 über das Zufuhr- und das Absaugrohr 10 bzw. 11 kommt es zu einer stetigen Erneuerung der Innenbadlösung 13, d.h. die an Morpholin angereicherte Innenbadlösung 13 nahe der Umlenkung 15 wird verdünnt, so daß die NMMO-Konzentration der Innenbadlösung 13 nahe der Umlenkung 15 kleiner oder höchstens gleich groß wie die NMMO-Konzentration des Spinnbades 3 ist. Dadurch reicht der Druck des Spinnbades 3 aus, um den Folienschlauch 16 entlang einer Kontaktstrecke 20 an die Umlenkung 15 so anzudrücken, daß er mehr oder weniger flachgedrückt wird, wie dies aus den Fig. 1 und 2 ersichtlich ist. Dadurch stellen sich in dem Folienschlauch über die gesamte Länge von knapp unterhalb der Oberfläche des Spinnbades 3 bis nahe zu der Umlenkung 15 gleichbleibende Druckverhältnisse ein, die dafür sorgen, daß das Kaliber bzw. der Durchmesser des Folienschlauchs 16 konstant ist und keine Schwankungen bzw. Dellen aufweist. Die Dichte der Innenbadlösung 13 ist somit abhängig von dem Durchsatz an Innenbadlösung bzw. Morpholin-Lösung, der Innenbadmenge und der Eintauchtiefe des Zulaufrohres 10 bzw. der Einspeisestelle frischer Morpholin-Lösung in die Innenbadlösung 13. Die Position bzw. die Stelle, an der die Innenbadlösung 13 in den Folienschlauch 16 einströmt, beeinflußt im wesentlichen die Kaliberkonstanz, die Innenbadhöhe im aufsteigenden Folienschlauch 14 nach der Umlenkung 15 und die Stelle zum Entfernen der Innenbadlösung 13 aus dem Inneren des Folienschlauchs.

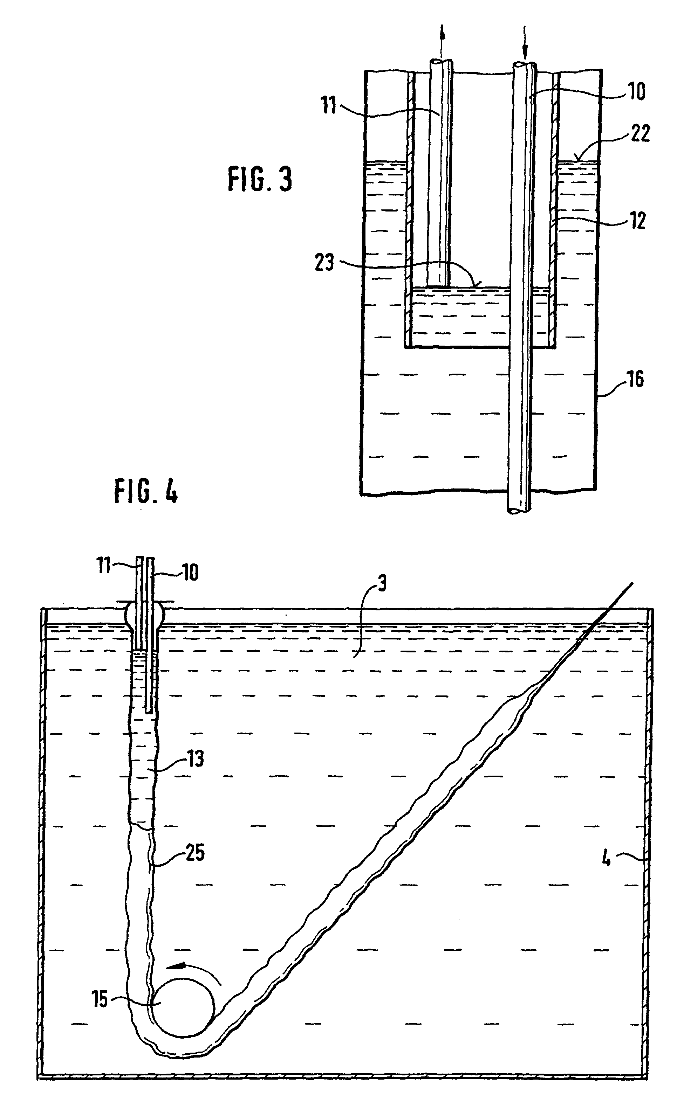

Fig. 3 zeigt den Ausschnitt gemäß der Stelle A in Fig. 1 in vergrößertem Maßstab. Das Rohr 12 ist etwa 5 bis 50 mm in die Innenbadlösung 13 im Inneren des Folienschlauchs eingetaucht. Das Absaugrohr 11 befindet sich in einer Position, in der sich ein Pegel 23 innerhalb des Rohrs 12 einstellt, der tiefer als ein Pegel 22 der Innenbadlösung außerhalb des Rohres 12 liegt. Das Absaugrohr 11 taucht etwa 3 bis 45 mm in die Innenbadlösung 13 ein. Mit anderen Worten bedeutet dies, daß das Absaugrohr 11 eine Position einnimmt, in der die Innnenbadlösung 13 so abgesaugt wird, daß sich der Pegel 23 in dem Abstand von 3 bis 45 mm unterhalb des Pegels 22 der Innenbadlösung im eintauchenden Folienschlauch 16 einstellt. Die Absaugung beginnt somit unterhalb der Oberfläche des Spinnbades 3, so daß die Luftstrecke 2 und die dort herrschenden Druckbedingungen keinen Einfluß auf die Innenbadlösung 13 haben und es somit auch nicht zu Kaliberschwankungen des Folienschlauchs 16 kommen kann.

Durch die Einstellung der Eintauchtiefe des Zufuhrrohrs 10 und die stetige Erneuerung der Innenbadlösung wird die Dichte der Innenbadlösung 13 auf einem gleichbleibenden Wert gehalten, der zu der Einschnürung des Folienschlauchs 16 entlang der Kontaktstrecke 20 der Umlenkung 15 führt und den Pegel der Innenbadlösung 13 im aufsteigenden Folienschlauch 14 bei beliebig langer Laufzeit konstant unterhalb der Oberfäche des Spinnbads 3 einstellt, so daß es nicht mehr zu unruhigem Lauf und Kaliberschwankungen des Folienschlauchs kommt. Die stetige Erneuerung bzw. die Mindestzufuhr an Innenbadlösung 13 ist für jede Extrusions- bzw. Abzugsgeschwindigkeit des Folienschlauchs eigens zu ermitteln.

Der aus dem Spinnbad 3 austretende Folienschlauch 14 durchläuft nachfolgend nicht gezeigte Fäll- und Waschkufen, und kann beispielsweise noch mit Weichmachern behandelt und anschließend getrocknet werden, bevor er aufgewickelt und weiterverarbeitet wird.

In Fig. 4 sind schematisch die Kaliberschwankungen eines Folienschlauchs 25 angedeutet, die sich dadurch ergeben, daß eine Erneuerung der Innenbadlösung nicht in der Weise stattfindet, daß frische Morpholin-Lösung nahe der Umlenkung 15 über das eingeschobene Zulaufrohr in die Innenbadlösung 13 eingeführt wird. Wegen der fehlenden Erneuerung der Innenbadlösung 13 steigt die NMMO-Konzentration im Folienschlauch nach unten hin an und erreicht einen größten Wert im Bereich der Umlenkung 15. Dieser Dichteanstieg der Innenbadlösung 13 bewirkt eine Ausweitung des Folienschlauchs 25 im Bereich der Umlenkung 15, so daß es zu ungleichmäßigen Kalibern über die Länge des Folienschlauchs kommt. Diese Kaliberschwankungen sind jedoch nicht auf den Bereich der Umlenkung 15 begrenzt, sondern treten schon zu Beginn des Eintritts des Folienschlauchs 25 in die Spinnbadlösung 3 auf. Eine Erklärung hierfür ist darin zu sehen, daß das Zulaufrohr 10 eine obere Position einnimmt, so daß durch die Zufuhr von frischer Morpholinlösung schon im oberen Teil des Folienschlauchs 25 sich eine zu niedrige Dichte der Innenbadlösung 13 einstellt und bis zur Umlenkung 15 zunimmt. Die zu hohe Dichte der Innenbadlösung 13 an der Umlenkung 15 führt dazu, daß der Folienschlauch 25 zeitweise keinen Kontakt mit der Umlenkung 15 hat und dadurch eine ungleichmäßige Geschwindigkeit aufweist, die sich als Kaliberschwankungen des Folienschlauchs 25 (Eierkette) bemerkbar machen.

## Patentansprüche

1. Verfahren zur Herstellung eines nahtlosen Folienschlauches auf Cellulosebasis durch Extrudieren einer wäßrigen Cellulose-N-methyl- morpholin N-oxid-(NMMO)-Lösung durch eine Ringdüse in ein Spinnbad, **dadurch gekennzeichnet, daß** der Folienschlauch in einer Luftstrecke zwischen der Ringdüse und der Oberfläche des Spinnbades durch Überdruck querverstreckt wird, daß der Folienschlauch mit einer Innenbadlösung gefüllt und im Spinnbad umgelenkt wird und daß der Pegel der Innenbadlösung im eintauchenden und aufsteigenden Teil des Folienschlauches tiefer als die Oberfläche des Spinnbades eingestellt wird.

2. Verfahren nach Anspruch 1, **dadurch gekennzeichnet, daß** die Innenbadlösung durch die Ringdüse hindurch in den Folienschlauch sowohl eingefüllt als auch abgesaugt wird, wobei das Einfüllen und das Absaugen räumlich voneinander getrennt vorgenommen werden.

3. Verfahren nach Anspruch 1, **dadurch gekennzeichnet, daß** der Folienschlauch senkrecht zu der Oberfläche des Spinnbades eintaucht und nach dem Umlenken innerhalb des Spinnbades unter einem Winkel von 10 bis 90° zur Horizontalen nach oben aus dem Spinnbad herausgeführt wird.

4. Verfahren nach Anspruch 1, **dadurch gekennzeichnet, daß** die Dichte der Innenbadlösung im Bereich der Umlenkung des Folienschlauches kleiner als im senkrecht eintauchenden Teil und im unter einem Winkel von 10 bis 90° zur Horizontalen herausgeführten Teil des Folienschlauches eingestellt wird.

5. Verfahren nach Anspruch 1, **dadurch gekennzeichnet, daß** das Spinnbad und die Innenbadlösung N-methyl-morpholin-N-oxid (NMMO) in wäßriger Lösung enthalten und daß die NMMO-Konzentrationen des Spinnbades und der Innenbadlösung zu Beginn der Extrusion des Folienschlauches etwa gleich groß gewählt werden.

6. Verfahren nach Anspruch 5, **dadurch gekennzeichnet, daß** die NMMO-Konzentration der Innenbadlösung während des Extrusionsvorgangs in Richtung des Umlenkbereichs des Folienschlauchs zunimmt und auch gegenüber der NMMO-Konzentration des Spinnbades zunächst ansteigt und durch stetige Erneuerung der Innenbadlösung auf einen Wert kleiner/gleich der Anfangskonzentration abgesenkt wird.

7. Verfahren nach Anspruch 1, **dadurch gekennzeichnet, daß** der Folienschlauch ohne innere und/oder äußere Abstützung durch das Spinnbad hindurchgeführt wird.

8. Verfahren nach Anspruch 2, **dadurch gekennzeichnet, daß** die Innenbadlösung in einem Rohr so abgesaugt wird, daß der Pegel der Innenbadlösung in dem Rohr niedriger als der Pegel der Innenbadlösung im Folienschlauch ist und daß das Rohr einen kleineren Durchmesser als der Folienschlauch aufweist.

9. Verfahren nach Anspruch 2, **dadurch gekennzeichnet, daß** das Einlaufen der Innenbadlösung höhenverstellbar innerhalb des eintauchenden Folienschlauches geregelt wird und daß die Innenbadlösung so abgesaugt wird, daß sich ein Pegel der Innenbadlösung in einem Abstand von 3 bis 45 mm unterhalb des Pegels der Innenbadlösung im eintauchenden Folienschlauch einstellt.

10. Verfahren nach Anspruch 1, **dadurch gekennzeichnet, daß** der Folienschlauch mit einem Überdruck von 0,5 bis 2,0 mbar in der Luftstrecke querverstreckt wird.

11. Verfahren nach Anspruch 1, **dadurch gekennzeichnet, daß** die Ringdüse auf die Temperatur der Cellulose-NMMO-Lösung aufgeheizt wird.

12. Vorrichtung zur Herstellung eines nahtlosen Folienschlauchs auf Cellulosebasis durch Extrudieren einer wäßrigen Cellulose-N-methyl- morpholin N-oxid (NMMO)-Lösung, die eine Ringdüse (1) und ein Spinnbad (3) umfaßt, **dadurch gekennzeichnet, daß** zwischen der Ringdüse (1) und der Oberfläche des Spinnbades (3) in einer Spinnkufe (4) eine Luftstrecke (2) vorhanden ist, daß ein Extrusionsdüsenspalt (19) der Ringdüse (1) einen Durchmesser größer als derAußendurchmesserdes Rohres (12) aufweist, daß durch den Spalt (17) Luft mit Überdruck in den Folienschlauch (16) einströmt und den Folienschlauch innerhalb der Luftstrecke (2) aufweitet und querverstreckt, daß nahe dem Boden der Spinnkufe (4) eine Umlenkung (15) für den senkrecht in das Spinnbad (3) eintauchenden Folienschlauch (16) angeordnet ist, und daß ein Zulauf- und ein Absaugrohr (10, 11) für eine Innenbadlösung (13) des Folienschlauchs durch die Ringdüse (1) hindurchgeführt sind und in den Folienschlauch (16) hineinragen.

13. Vorrichtung nach Anspruch 12, **dadurch gekennzeichnet, daß** ein Rohr(12) das Zulauf- und Absaugrohr (10, 11) umschließt, eine Pinole (7) der Ringdüse (1) zentral durchsetzt und einen Spalt (17) mit einem zentralen Durchgang (18) der Pinole (7) bildet, wobei das Rohr (12) in die Innenbadlösung (13) des Folienschlauchs (16) eintaucht und einen kleineren Durchmesser als der Folienschlauch (16) aufweist.

14. Vorrichtung nach Anspruch 12, **dadurch gekennzeichnet, daß** das Absaugrohr (11) innerhalb des senkrecht eintauchenden Folienschlauchs (16) höhenverstellbar ist.

15. Vorrichtung nach Anspruch 12, **dadurch gekennzeichnet, daß** das Zulaufrohr (10) innerhalb des senkrecht eintauchenden Folienschlauches (16) höhenverstellbar ist, wobei es zu Beginn des Einfüllens der Innenbadlösung in den Folienschlauch (16) eine Position knapp unterhalb der Spinnbadoberfläche und nach erfolgtem Einfüllen der Innenbadlösung eine Position knapp oberhalb der Umlenkung (15) für den Folienschlauch (16) einnimmt.

16. Vorrichtung nach Anspruch 13, **dadurch gekennzeichnet, daß** das Rohr (12) 5 bis 50 mm und das Absaugrohr (11) 3 bis 45 mm in die Innenbadlösung (13) eintauchen.

17. Vorrichtung nach Anspruch 12, **dadurch gekennzeichnet, daß** die Umlenkung (15) ein Porzellan- oder Glasstab ist, dessen Durchmesser größer als das Kaliber des Folienschlauchs (16) ist.

18. Vorrichtung nach Anspruch 12, **dadurch gekennzeichnet, daß** das Spinnbad (3) und die Innenbadlösung (13) wäßrige NMMO-Lösungen enthalten, die zu Beginn der Extrusion des Folienschlauchs (16) gleich große NMMO-Konzentrationen aufweisen.

19. Vorrichtung nach Anspruch 17, **dadurch gekennzeichnet, daß** die Umlenkung (15) eine Kontaktstrecke (20) aufweist, an welcher der Folienschlauch (16) flach anliegt.

20. Vorrichtung nach Anspruch 12, **dadurch gekennzeichnet, daß** die Ringdüse (1) mittels eines Heizmediums (21), das die Ringdüse durchströmt, beheizt ist.

21. Vorrichtung nach Anspruch 12, **dadurch gekennzeichnet, daß** der Folienschlauch (14) nach der Umlenkung (15) schräg nach oben geführt ist und das gleiche Kaliberwie der senkrecht eintauchende Folienschlauch (16) aufweist.

22. Vorrichtung nach Anspruch 12, **dadurch gekennzeichnet, daß** die Luftstrecke (2) 10 bis 100 mm beträgt.

## Claims

1. A process for producing a seamless cellulose-based tubular film by extrusion of an aqueous cellulose - N-methylmorpholine N-oxide (NMMO) solution through an annular die into a spinning bath, which comprises transversely stretching the tubular film in an air section between the annular die and the surface of the spinning bath by overpressure; the tubular film being filled with an inner bath solution and being bent in the spinning bath; and the level of the inner bath solution in the submerging and ascending paths of the tubular film being set lower than the surface of the spinning bath.

2. The process as claimed in claim 1, wherein the inner bath solution is both charged into the tubular film and removed by suction through the annular die, the filling and the removal being performed spatially separate from each other.

3. The process as claimed in claim 1, wherein the tubular film submerges vertically to the surface of the spinning bath and, after being bent within the spinning bath, is lead out upwards from the spinning bath at an angle of 10 to 90° to the horizontal.

4. The process as claimed in claim 1, wherein the density of the inner bath solution in the area of the bending of the tubular film is set to be lower than in the vertically submerging part and in the part of the tubular film which is led out at an angle of 10 to 90° to the horizontal.

5. The process as claimed in claim 1, wherein the spinning bath and the inner bath solution comprise N-methylmorpholine N-oxide (NMMO) in aqueous solution, and the NMMO concentrations of the spinning bath and the inner bath solution are chosen to be approximately equal at the start of the extrusion of the tubular film.

6. The process as claimed in claim 5, wherein the NMMO concentration of the inner bath solution increases during the extrusion process in the direction of the area of bending of the tubular film and at first also increases with respect to the NMMO concentration of the spinning bath and is decreased to a value less than or equal to the initial concentration by constant renewal of the inner bath solution.

7. The process as claimed in claim 1, wherein the tubular film is conducted through the spinning bath without inner and/or outer support.

8. The process as claimed in claim 2, wherein the inner bath solution is removed by suction in a tube in such a manner that the level of the inner bath solution in the tube is lower than the level of the inner bath solution in the tubular film, and the tube has a smaller diameter than the tubular film.

9. The process as claimed in claim 2, wherein the inflow of the inner bath solution is controlled in a height-adjustable manner within the submerging tubular film, and the inner bath solution is removed by suction in such a manner that a level of the inner bath solution is established at a distance of 3 to 45 mm below the level of the inner bath solution in the submerging tubular film.

10. The process as claimed in claim 1, wherein the tubular film is transversely stretched in the air section at an overpressure of 0.5 to 2.0 mbar.

11. The process as claimed in claim 1, wherein the annular die is heated to the temperature of the cellulose - NMMO solution.

12. An apparatus for producing a seamless cellulose-based tubular film by extrusion of an aqueous cellulose - N-methylmorpholine N-oxide (NMMO) solution which comprises an annular die (1) and a spinning bath (3), **characterized in that** an air section (2) is present between the annular die (1) and the surface of the spinning bath (3) in a spinning tub (4), wherein an extrusion die gap (19) of the annular die (1) has a diameter greater than the outer diameter of the tube (12), wherein air flows into the tubular film (16) through the gap (17) at overpressure and expands and transversely stretches the tubular film within the air section (2), near the bottom of the spinning tub (4) there is disposed a guide (15) for the tubular film (16) submerging vertically in the spinning bath (3), and wherein a feed tube (10) and a suction tube (11) for an inner bath solution (13) of the tubular film are passed through the annular die (1) and project into the tubular film (16).

13. The apparatus as claimed in claim 12, wherein a tube (12) which surrounds feed tube and suction tube (10, 11) passes centrally through a spindle sleeve (7) of the annular die (1) and forms a gap (17) with a central passageway (18) of the spindle sleeve (7), the tube (12) submerging into the inner bath solution (13) of the tubular film (16) and having a smaller diameter than the tubular film (16).

14. The apparatus as claimed in claim 12, wherein the suction tube (11) is heightadjustable within the vertically submerging tubular film (16).

15. The apparatus as claimed in claim 12, wherein the feed tube (10) is heightadjustable within the vertically submerging tubular film (16), whereby it adopts a position narrowly below the surface of the spinning bath at the start of charging the inner bath solution into the tubular film (16) and, when charging the inner bath solution is completed, is slid into the tubular film (16) into a position just above the guide (15).

16. The apparatus as claimed in claim 13, wherein the tube (12) is submerged 5 to 50 mm, and the suction tube (11) is submerged 3 to 45 mm, in the inner bath solution (13).

17. The apparatus as claimed in claim 12, wherein the guide (15) is a porcelain or glass rod whose diameter is greater than the caliber of the tubular film (16).

18. The apparatus as claimed in claim 12, wherein the spinning bath (3) and the inner bath solution (13) are aqueous NMMO solutions which, at the start of the extrusion of the tubular film (16) have equal NMMO concentrations.

19. The apparatus as claimed in claim 17, wherein the guide (15) has a contact section (20), at which the tubular film (16) abuts flat.

20. The apparatus as claimed in claim 12, wherein the annular die (1) is heated by a heating medium (21) which flows through the annular die.

21. The apparatus as claimed in claim 12, wherein the tubular film (14) is ascending upwards at an incline after detachment from the guide (15) and has the same caliber as the vertically submerging tubular film (16).

22. The apparatus as claimed in claim 12, wherein the air section (2) is 10 to 100 mm.

## Revendications

1. Procédé de fabrication d'un film tubulaire sans couture à base de cellulose par extrusion d'une solution cellulosique aqueuse de N-oxyde de N-méthylmorpholine (NMMO) à travers une filière annulaire dans un bain de filage, **caractérisé en ce que** le film tubulaire est étiré en travers sous l'action d'une surpression dans un intervalle d'air entre la filière tubulaire et la surface du bain de filage par surpression, **en ce que** le film tubulaire est rempli d'une solution de bain interne et est dévié dans le bain de filage et **en ce que** le niveau de la solution de bain interne dans la partie immergée et montante du film tubulaire est réglé plus profond que la surface du bain de filage.

2. Procédé selon la revendication 1, **caractérisé en ce que** la solution de bain interne est non seulement introduite dans le film tubulaire, mais en est également aspirée à travers la filière annulaire, le remplissage et l'aspiration étant effectués spatialement séparément l'un de l'autre.

3. Procédé selon la revendication 1, **caractérisé en ce que** le film tubulaire est immergé perpendiculairement à la surface du bain de filage et, après déviation au sein du bain de filage est évacué du bain de filage vers le haut selon un angle de 10 à 90° par rapport à l'horizontale.

4. Procédé selon la revendication 1, **caractérisé en ce que** la densité de la solution de bain interne dans la zone de la déviation du film tubulaire est réglée plus faible que dans la partie immergée perpendiculairement et dans la partie du film tubulaire évacuée selon un angle de 10 à 90° par rapport à l'horizontale.

5. Procédé selon la revendication 1, **caractérisé en ce que** le bain de filage et la solution de bain interne contiennent du N-oxyde de N-méthylmorpholine (NMMO) en solution aqueuse et **en ce que** les concentrations en NMMO du bain de filage et de la solution de bain interne sont choisies à un niveau plus ou moins égal au début de l'extrusion du film tubulaire.

6. Procédé selon la revendication 5, **caractérisé en ce que** la concentration en NMMO de la solution de bain interne au cours de l'opération d'extrusion augmente dans la direction de la zone de déviation du film tubulaire et augmente également tout d'abord par rapport à la concentration en NMMO du bain de filage pour diminuer ensuite, par appoint permanent de la solution de bain interne, à une valeur inférieure ou égale à la concentration initiale.

7. Procédé selon la revendication 1, **caractérisé en ce que** le film tubulaire est envoyé à travers le bain de filage sans appui interne et/ou externe.

8. Procédé selon la revendication 2, **caractérisé en ce que** la solution de bain interne est aspirée dans un tube, de sorte que le niveau de la solution de bain interne dans le tube soit plus petit que le niveau de la solution de bain interne dans le film tubulaire et **en ce que** le tube présente un diamètre plus petit que celui du film tubulaire.

9. Procédé selon la revendication 2, **caractérisé en ce que** l'introduction de la solution de bain interne est réglée par déplacement en hauteur à l'intérieur du film tubulaire immergé et **en ce que** la solution de bain interne est aspirée de manière à régler un niveau de la solution de bain interne à une distance de 3 à 45 mm en dessous du niveau de la solution de bain interne dans le film tubulaire immergé.

10. Procédé selon la revendication 1, **caractérisé en ce que** le film tubulaire est étiré en travers sous l'effet d'une surpression de 0,5 à 2,0 mbars dans l'intervalle d'air.

11. Procédé selon la revendication 1, **caractérisé en ce que** la filière annulaire est chauffée à la température de la solution cellulosique de NMMO.

12. Dispositif de fabrication d'un film tubulaire à base de cellulose sans couture par extrusion d'une solution cellulosique aqueuse de N-oxyde de N-méthylmorpholine (NMMO), qui comprend une filière annulaire (1) et un bain de filage (3), **caractérisé en ce qu'**il y a un intervalle d'air (2) entre la filière annulaire (1) et la surface du bain de filage (3), dans une cuve de filage (4), **en ce qu'**une fente d'extrusion (19) de la filière annulaire (1) présente un diamètre plus grand que le diamètre externe du tube (12), **en ce qu'**à travers la fente (17), de l'air en surpression est injecté dans le film tubulaire (16) qu'il évase et étire en travers dans l'intervalle d'air (2), **en ce que**, près du fond de la cuve de filage (4), est ménagée une déviation (15) pour le film tubulaire immergé perpendiculairement dans le bain de filage (3) et **en ce qu'**un tube d'admission et un tube d'aspiration (10, 11) pour une solution de bain interne (13) du film tubulaire traversent la filière annulaire (1) et font saillie dans le film tubulaire (16).

13. Dispositif selon la revendication 12, **caractérisé en ce qu'**un tube (12) entoure le tube d'admission et le tube d'aspiration (10, 11), traverse centralement une douille (7) de la filière annulaire (1) et forme une fente (17) avec un passage central (18) de la douille (7), le tube (12) étant immergé dans la solution de bain interne (13) du film tubulaire (16) et présentant un diamètre plus petit que celui du film tubulaire (16).

14. Dispositif selon la revendication 12, **caractérisé en ce que** le tube d'aspiration (11) peut être réglé en hauteur à l'intérieur du film tubulaire (16) immergé perpendiculairement.

15. Dispositif selon la revendication 12, **caractérisé en ce que** le tube d'admission (10) peut être réglé en hauteur à l'intérieur du film tubulaire (16) immergé perpendiculairement de manière à adopter, au début du remplissage de la solution de bain interne dans le film tubulaire (16), une position située juste en dessous de la surface du bain de filage et, après remplissage réussi de la solution de bain interne, une position située juste au-dessus de la déviation (15) pour le film tubulaire (16).

16. Dispositif selon la revendication 13, **caractérisé en ce que** le tube (12) est immergé sur 5 à 50 mm dans la solution de bain interne (13) et le tube d'aspiration (11) sur 3 à 45 mm.

17. Dispositif selon la revendication 12, **caractérisé en ce que** la déviation (15) est une tige de porcelaine ou de verre, dont le diamètre est supérieur au calibre du film tubulaire (16).

18. Dispositif selon la revendication 12, **caractérisé en ce que** le bain de filage (3) et la solution de bain interne (13) contiennent des solutions aqueuses de NMMO, qui présentent, au début de l'extrusion du film tubulaire (16), des concentrations de NMMO de grandeur égale.

19. Dispositif selon la revendication 17, **caractérisé en ce que** la déviation (15) présente un trajet de contact (20), sur lequel le film tubulaire (16) s'applique à plat.

20. Dispositif selon la revendication 12, **caractérisé en ce que** la filière annulaire (1) est chauffée au moyen d'un agent de chauffage (21) qui traverse la filière annulaire.

21. Dispositif selon la revendication 12, **caractérisé en ce que** le film tubulaire (14) est guidé, après la déviation (15), en oblique vers le haut et présente le même calibre que le film tubulaire (16) immergé perpendiculairement.

22. Dispositif selon la revendication 12, **caractérisé en ce que** l'intervalle d'air (2) est de 10 à 100 mm.
